# EUROPEAN PATENT APPLICATION

(11) **EP 4 456 024 A1**
(43) Date of publication of application: **30.10.2024**
(21) Application number: 21969063.3
(22) Date of filing: 24.12.2021
(51) Int. Cl.: G07D 11/235

(54) **DETERIORATION-DETERMINING SYSTEM AND DETERIORATION-DETERMINING METHOD**

(71) Applicant: Fujitsu Frontech Limited, Inagi-shi, Tokyo 206-8555 (JP)
(72) Inventor: SHIMURA, Rei, Inagi-shi, Tokyo 206-8555 (JP)
(74) Representative: Haseltine Lake Kempner LLP
(86) International application number: PCT/JP2021/048242
(87) International publication number: WO 2023/119632

(57) **Abstract**

A degradation judgement system (100) includes a field repair unit that is provided in a banknote handling apparatus (50), a vibration detection sensor (51), a judgement unit (62), and a notification unit (63), wherein the field repair unit includes a rubber part, the vibration detection sensor (51) measures vibration data by detecting vibration of the field repair unit, the judgement unit (62) judges a degree of deterioration of the rubber part included in the field repair unit based on a peak of a vibration amplitude that is obtained from the vibration data and based on a root mean square of the vibration amplitude, and the notification unit (63) gives a notification of the judged degree of deterioration.

## Description

### Technical Field

The present disclosure relates to a degradation judgement system and a degradation judgement method.

### Background Art

A banknote handling apparatus, such as an automatic teller machine (ATM), sometimes includes a field repair unit that is able to be individually replaced. An example of a field repair unit includes, as one example, a deposit and withdrawal unit that performs deposit and withdrawal of a banknote, a storage unit that temporarily stores therein the banknote, a storage cassette that stores therein banknotes for each denomination, and the like.

### Citation List

### Patent Literature

Patent Literature 1: Japanese Laid-open Patent Publication No. 2007-210718
Patent Literature 2: Japanese Laid-open Patent Publication No. 2010-281280
Patent Literature 3: Japanese Laid-open Patent Publication No. 2010-052470

### Summary of invention

### Technical Problem

If a failure occurs in the field repair unit, which leads to difficulty in using the banknote handling apparatus.

Accordingly, it is an object in one aspect of an embodiment of the present disclosure to provide a technology capable of replacing a field repair unit at an appropriate time before a failure occurs in the field repair unit.

### Solution to Problem

A degradation judgement system of the disclosed technology includs a field repair unit that is provided in a banknote handling apparatus, a sensor, a judgement unit and a notification unit. The field repair unit includes a rubber part. The sensor measures vibration data by detecting vibration of the field repair unit. The judgement unit judges a degree of deterioration of the rubber part based on a peak of a vibration amplitude that is obtained from the vibration data and based on a root mean square of the vibration amplitude. The notification unit gives a notification of the judged degree of deterioration.

### Advantageous Effects of Invention

According to the disclosed technology, it is possible to replace a field repair unit at an appropriate time before a failure occurs in the field repair unit.

### Brief Description of Drawings

FIG. 1 is a diagram illustrating one example of vibration data on a brand new rubber part according to the present disclosure.
FIG. 2 is a diagram illustrating one example of vibration data on a degraded rubber part according to the present disclosure.
FIG. 3 is a diagram illustrating one example of a peak amplitude according to the present disclosure.
FIG. 4 is a diagram illustrating one example of a two-dimensional graph of a peak amplitude with respect to an amplitude RMS according to the present disclosure.
FIG. 5 is a diagram illustrating one example of a plot point group in a two-dimensional graph of the peak amplitude with respect to the amplitude RMS according to the present disclosure.
FIG. 6 is a diagram illustrating one example of a degradation judgement threshold according to the present disclosure.
FIG. 7 is a diagram illustrating an example of a configuration of a banknote handling apparatus according to the present disclosure.
FIG. 8 is a diagram illustrating an example of a configuration of a degradation judgement system according to the present disclosure.
FIG. 9 is a diagram illustrating one example of communication data according to the present disclosure.

### Embodiments for Carrying Out the Invention

Preferred embodiments of the present disclosure will be explained with reference to accompanying drawings. In the embodiments described below, the same reference numerals are assigned to the same configurations.

### [Embodiment]

### <Setting of degradation judgement threshold>

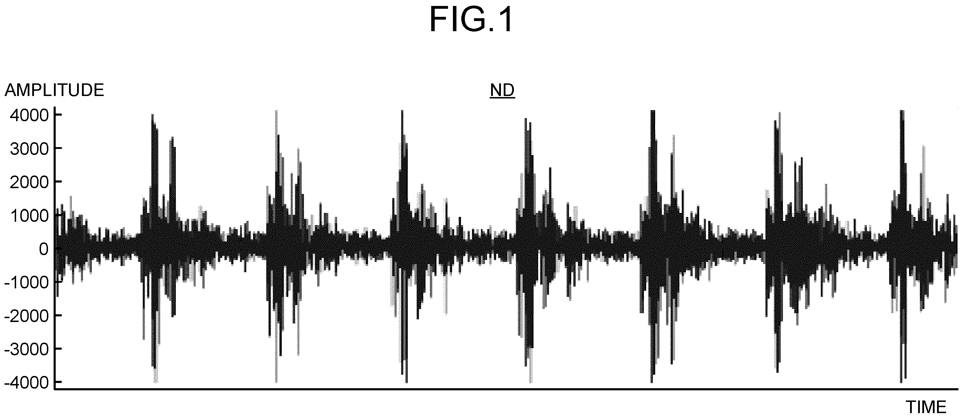

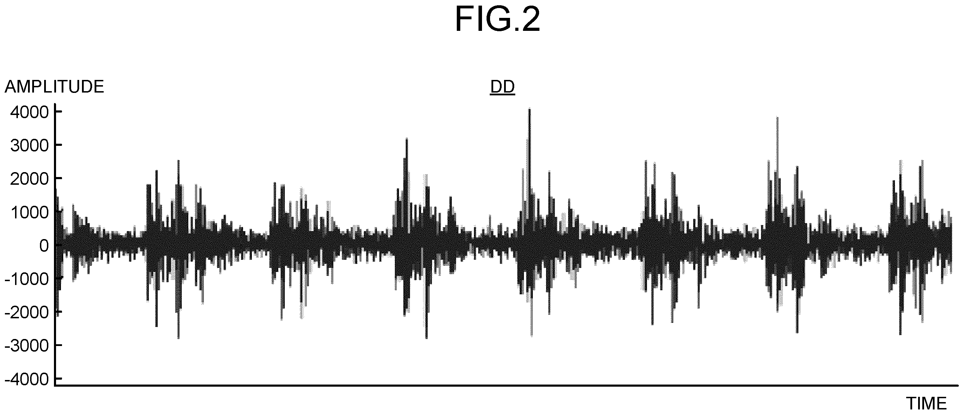

A field repair unit that particularly includes a rubber part from among field repair units is likely to lead to a failure of the field repair unit in the case where degradation of the rubber part progressed. Furthermore, in accordance with the degradation of the rubber part included in the field repair unit, the magnitude of the amplitude of vibration occurring in the rubber part at the time of driving of the field repair unit is changed. FIG. 1 is a diagram illustrating one example of vibration data on a brand new rubber part (hereinafter, sometimes referred to as a "brand new part") according to the present disclosure, and FIG. 2 is a diagram illustrating one example of vibration data on a degraded rubber part (hereinafter, sometimes referred to as a "degradation part") according to the present disclosure. When vibration data ND on the brand new part illustrated in FIG. 1 is compared with vibration data DD on the degradation part illustrated in FIG. 2, it is found that the vibration amplitude of the degradation part is smaller than the vibration amplitude of the brand new part.

Accordingly, first, by measuring, by using the brand new part serving as a sample, vibration data obtained for a period of 3 seconds 10 times, and by dividing each of the pieces of the vibration data obtained for the period of 3 seconds into 0.3 seconds, 100 pieces of vibration data each of which is obtained for the period of 0.3 seconds as vibration data on a brand new part (hereinafter, sometimes referred to as "brand new part data"). In a similar manner, by measuring, by using the degradation part serving as a sample, vibration data obtained for a period of 3 seconds 10 times, and by dividing each of the pieces of the vibration data obtained for the period of 3 seconds into 0.3 seconds, 100 pieces of vibration data each of which is obtained for the period of 0.3 seconds as vibration data on a degradation part (hereinafter, sometimes referred to as a "degradation part data").

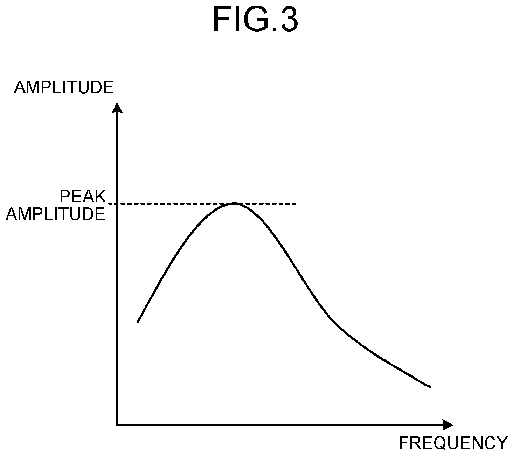

After that, by converting a time domain related to each of the 100 pieces of the brand new part to a frequency domain by using, for example, Fourier transformation, 100 pieces of the brand new part data represented in the frequency domain are acquired. In a similar manner, by converting a time domain related to each of the 100 pieces of the degradation part data to a frequency domain by using, for example, Fourier transformation, 100 pieces of the degradation part data represented in the frequency domain are acquired. Then, as illustrated in FIG. 3, regarding each of the pieces of brand new part data represented in the frequency domain and each of the pieces of degradation part data represented in the frequency domain, a vibration amplitude having the maximum peak (hereinafter, sometimes referred to as a "peak amplitude") is detected. FIG. 3 is a diagram illustrating one example of a peak amplitude according to the present disclosure. In the following description, the peak amplitude that has been detected in the brand new part data is sometimes referred to as a "brand new part peak amplitude", and the peak amplitude that has been detected in the degradation part data is sometimes referred to as a "degradation part peak amplitude". The 100 brand new part peak amplitudes are acquired from the 100 pieces of brand new part data, and the 100 degradation part peak amplitudes are acquired from the 100 pieces of degradation part data.

On the other hand, a root mean square (RMS) of the vibration amplitude is calculated in each of the 100 pieces of brand new part data. In a similar manner, a RMS of the vibration amplitude is calculated in each of the 100 pieces of degradation part data. In the following description, a RMS of the vibration amplitude is sometimes referred to as an "amplitude RMS", an amplitude RMS of the brand new part data is sometimes referred to as "brand new part RMS", and an amplitude RMS of the degradation part data is sometimes referred to as "degradation part RMS". The 100 pieces of brand new part RMS are calculated from the 100 pieces of brand new part data, and the 00 pieces of degradation part RMS are calculated from the 100 pieces of degradation part data.

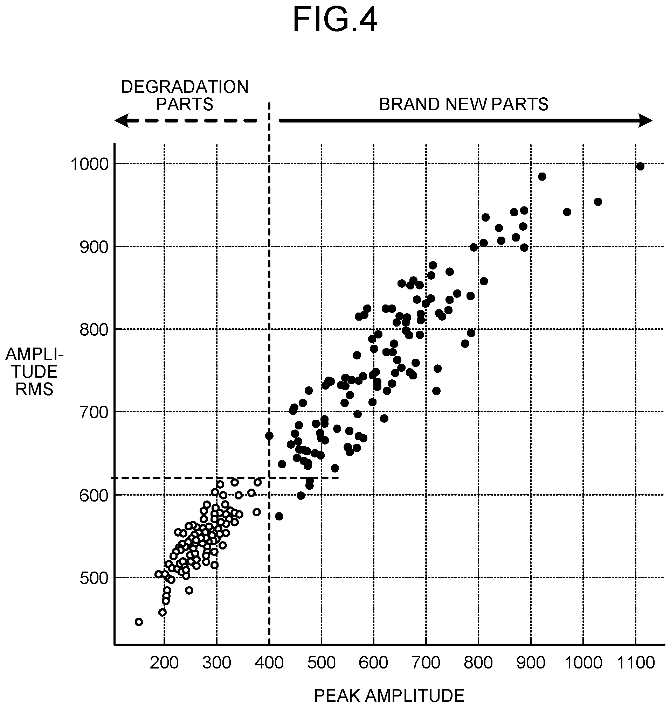

After that, regarding each of the 100 pieces of brand new part data, the 100 brand new part peak amplitudes and the 100 pieces of brand new part RMS are associated with each other, and then, as illustrated in FIG. 4, the obtained pieces of associated data are plotted into a two-dimensional graph of the peak amplitude with respect to the amplitude RMS. In a similar manner, regarding each of the 100 pieces of degradation part data, the 100 degradation part peak amplitudes and the 100 pieces of degradation part RMS are associated with each other, and then, as illustrated in FIG. 4, the obtained pieces of associated data are plotted into the two-dimensional graph of the peak amplitude with respect to the amplitude RMS. FIG. 4 is a diagram illustrating one example of the two-dimensional graph of the peak amplitude with respect to the amplitude RMS according to the present disclosure. As illustrated in FIG. 4, all of the plot points of the pieces of brand new part data are present in a region in which the peak amplitude is equal to or larger than 400, and all of the plot points of the pieces of degradation part data are present in a region in which the peak amplitude is less than 400. Furthermore, as illustrated in FIG. 4, almost all of the plot points of the brand new part data are present in a region in which the amplitude RMS is equal to or larger than 620, and almost all of the plot points of the degradation part data are present in a region in which the amplitude RMS is less than 620. Accordingly, the value of 400 of the peak amplitude serves as a reference peak amplitude for setting a degradation judgement threshold, and the value of 620 of the amplitude RMS serves as a reference amplitude RMS for setting the degradation judgement threshold.

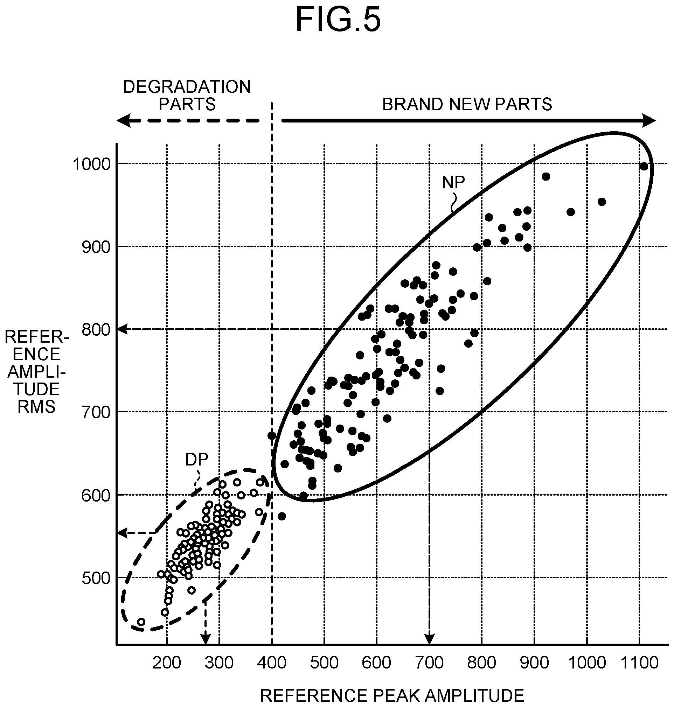

Furthermore, in order to consider a distribution state of the plot points of the brand new part data, as illustrated in FIG. 5, an average value of the brand new part peak amplitudes included in a plot point group NP that is constituted of 100 plot points of the pieces of brand new part data (hereinafter, sometimes referred to as a "brand new part peak amplitude average value"), and an average value of the pieces of brand new part RMS included in the plot point group NP that is constituted of 100 plot points of the pieces of brand new part data (hereinafter, sometimes referred to as a "brand new part RMS average value") are calculated. In a similar manner, in order to consider a distribution state of the plot points of the degradation part data, as illustrated in FIG. 5, an average value of the degradation part peak amplitudes included in a plot point group DP that is constituted of 100 plot points of the pieces of degradation part data (hereinafter, sometimes referred to as a "degradation part peak amplitude average value"), and an average value of the pieces of degradation part RMS included in the plot point group DP that is constituted of 100 plot points of the pieces of degradation part data (hereinafter, sometimes referred to as a "degradation part RMS average value") are calculated. As a result of this, as illustrated in, for example FIG. 5, the brand new part peak amplitude average value has been calculated as 700, the brand new part RMS average value is calculated as 800, the degradation part peak amplitude average value is calculated as 280, and the degradation part RMS average value is calculated as 550. Accordingly, each of the brand new part peak amplitude average value of 700 and the degradation part peak amplitude average value of 280 serves as a reference peak amplitude for setting the degradation judgement threshold, and each of the brand new part RMS average value of 800 and the degradation part RMS average value of 550 serves as a reference amplitude RMS for setting the degradation judgement threshold. FIG. 5 is a diagram illustrating one example of a plot point group in the two-dimensional graph of the peak amplitude with respect to the amplitude RMS according to the present disclosure.

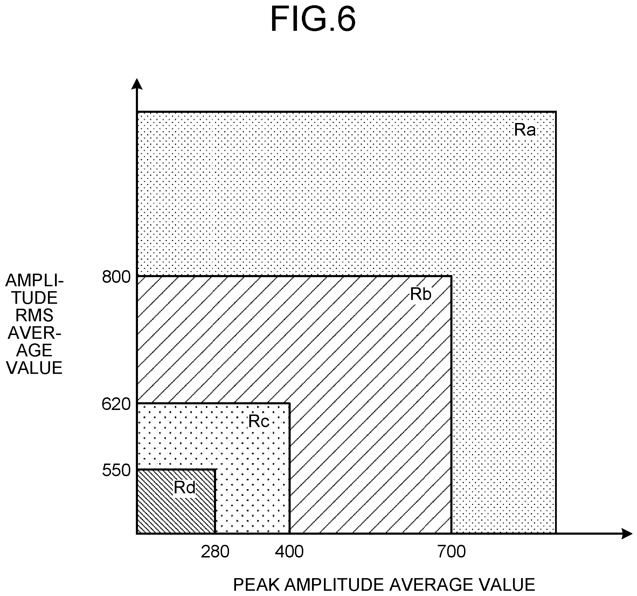

After that, by using the reference peak amplitudes of 280, 400, and 700 and the pieces of reference amplitude RMS if 550, 620, and 800, the degradation judgement threshold is set in a manner as illustrated in FIG. 6. FIG. 6 is a diagram illustrating one example of the degradation judgement threshold according to the present disclosure. As illustrated in FIG. 6, for example, a threshold THP1 of 700, a threshold THP2 of 400, and a threshold THP3 of 280 are set as a degradation judgement threshold with respect to the average value of the peak amplitudes of the 100 pieces of vibration data that are acquired in a period of 3 seconds as described above (hereinafter, sometimes referred to as a "peak amplitude average value"). Furthermore, for example, the threshold THR1 of 800, the threshold THR2 of 620, and the threshold THR3 of 550 are set as the degradation judgement threshold with respect to the average value of the pieces of amplitude RMS of the 100 pieces of vibration data that are acquired in a period of 3 seconds as described above (hereinafter, sometimes referred to as a "amplitude RMS average value"). Then, a region in which the peak amplitude average value is equal to or larger than THP1 and the amplitude RMS average value is equal to or larger than THR1 is defined as a safe region Ra. Furthermore, a region in which the peak amplitude average value is larger than THP2 and is less than THP1 and also the amplitude RMS average value is equal to or larger than THR2 and is less than THR1 is defined as an attention region Rb. Furthermore, a region in which the peak amplitude average value is equal to or larger than THP3 and is less than THP2 and also the amplitude RMS average value is equal to or larger than THR3 and is less than THR2 is defined as a critical region Rc. Furthermore, a region in which the peak amplitude average value is less than THP3 and also the amplitude RMS average value is less than THR3 is defined as a failure region Rd. In other words, the degree of degradation of the rubber part included in the field repair unit (hereinafter, sometimes referred to as a "FRU degradation level") is the lowest in the safe region Ra, is the highest in the failure region Rd, and increases in the order of the safe region Ra, the attention region Rb, the critical region Rc, and the failure region Rd.

### <Configuration of banknote handling apparatus>

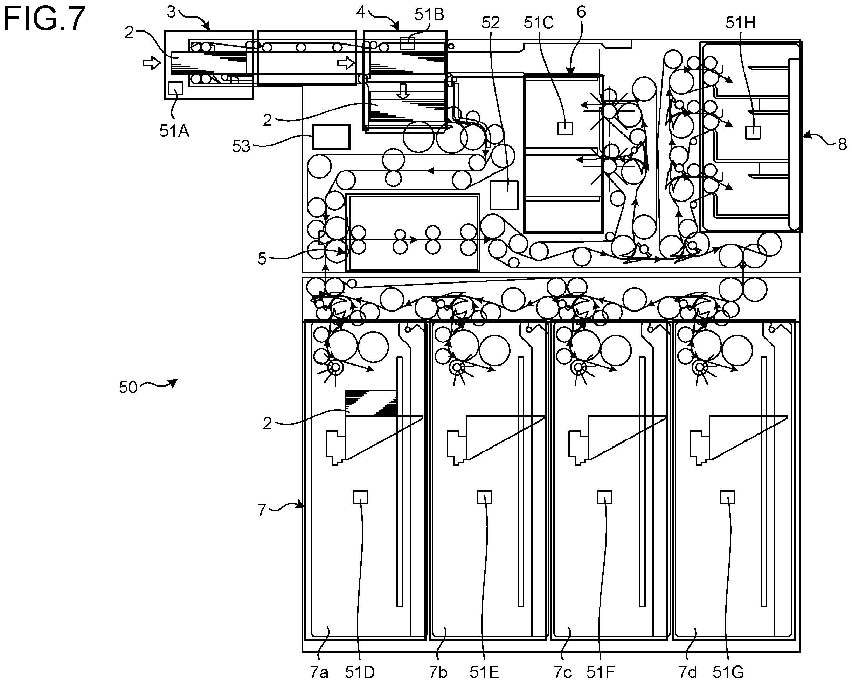

FIG. 7 is a diagram illustrating an example of a configuration of a banknote handling apparatus according to the present disclosure.

In FIG. 7, a banknote handling apparatus 50 includes a deposit and withdrawal unit 3 that performs deposit and withdrawal of a banknote 2, a first storage unit 4 that temporarily stores therein the banknote 2 that has been deposited from the deposit and withdrawal unit 3, a discrimination unit 5 that discriminates the banknote 2 conveyed from the first storage unit 4, and a second storage unit 6 that temporarily stores therein the banknote 2 that has been conveyed from the discrimination unit 5. Furthermore, the banknote handling apparatus 50 includes a return unit 7 that returns the banknote 2 by storing and discharging the banknote 2 conveyed from the discrimination unit 5, and a reject unit 8 that stores therein the banknote 2 that has an abnormal thickness or an abnormal length, the banknote 2 that has been damaged, and the like.

The banknote 2 that has been deposited from the deposit and withdrawal unit 3 is stored in the first storage unit 4, and is then discriminated by the discrimination unit 5. The banknote 2 in which abnormality has been detected by the discrimination unit 5 is conveyed from the discrimination unit 5 to the reject unit 8 and is then stored. On the other hand, the banknote 2 in which abnormality has not been detected by the discrimination unit 5 is stored in the second storage unit 6.

In the case where a return process is performed on the banknote 2 that has been deposited from the deposit and withdrawal unit 3, the banknote 2 stored in the second storage unit 6 is conveyed to the deposit and withdrawal unit 3, and is then returned from the deposit and withdrawal unit 3. On the other hand, in the case where a deposit process is performed on the banknote 2 that has been deposited from the deposit and withdrawal unit 3, after the banknote 2 that has been stored in the second storage unit 6 is conveyed to the first storage unit 4 and is then conveyed from the first storage unit 4 to the discrimination unit 5, the banknote 2 is conveyed from the discrimination unit 5 to the return unit 7, and is then stored in storage cassettes 7a, 7b, 7c, and 7d included in the return unit 7 for each denomination.

Furthermore, in the case where the banknote 2 that has been stored in the return unit 7 is withdrawn, after the banknote 2 stored in the return unit 7 is conveyed from the return unit 7 to the discrimination unit 5, the banknote 2 is conveyed from the discrimination unit 5 to the second storage unit 6 and is then stored in the second storage unit 6, and the banknote 2 that has been stored in the second storage unit 6 is conveyed to the deposit and withdrawal unit 3 and is then withdrawn from the deposit and withdrawal unit 3.

Each of the deposit and withdrawal unit 3, the first storage unit 4, the second storage unit 6, the storage cassettes 7a to 7d, and the reject unit 8 is one example of a field repair unit that is able to be individually replaced. Each of the deposit and withdrawal unit 3, the first storage unit 4, the second storage unit 6, the storage cassettes 7a to 7d, and the reject unit 8 includes a conveyance roller that is used to convey the banknote 2, and a conveyance motor that is used to drive the conveyance roller. The conveyance roller for conveying the banknote 2 is one example of the rubber part.

A vibration detection sensor 51A is attached to the deposit and withdrawal unit 3, a vibration detection sensor 51B is attached to the first storage unit 4, a vibration detection sensor 51C is attached to the second storage unit 6, and a vibration detection sensor 51H is attached to the reject unit 8. Furthermore, a vibration detection sensor 51D is attached to the storage cassette 7a, a vibration detection sensor 51E is attached to the storage cassette 7b, a vibration detection sensor 51F is attached to the storage cassette 7c, and a vibration detection sensor 51G is attached to the storage cassette 7d. It is preferable that each of the vibration detection sensors 51A, 51B, 51C, 51D, 51E, 51F, 51G, and 51H be attached in the vicinity of the conveyance roller that is included in each of the deposit and withdrawal unit 3, the first storage unit 4, the second storage unit 6, the storage cassettes 7a to 7d, and the reject unit 8.

Furthermore, the banknote handling apparatus 50 includes a data generation unit 52 and a transmission unit 53.

In the following description, the deposit and withdrawal unit 3, the first storage unit 4, the second storage unit 6, the storage cassettes 7a to 7d, and the reject unit 8 are sometimes collectively referred to as a "field repair unit". In addition, in the following description, the vibration detection sensors 51A to 51H are sometimes collectively referred to as a "vibration detection sensor 51".

An example of the vibration detection sensor 51 includes, as one example, an acceleration sensor. The data generation unit 52 is implemented by, for example, a processor, such as a central processing unit (CPU), a digital signal processor (DSP), and a field programmable gate array (FPGA), as hardware. The transmission unit 53 is implemented by, for example, a communication module as hardware.

### <Configuration of degradation judgement system>

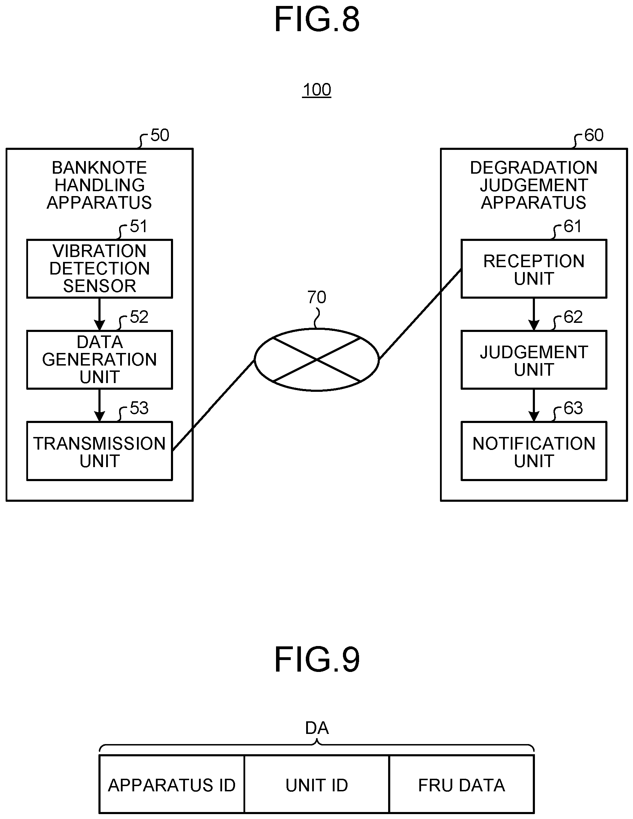

FIG. 8 is a diagram illustrating an example of a configuration of a degradation judgement system according to the present disclosure.

In FIG. 8, a degradation judgement system 100 includes the banknote handling apparatus 50 and a degradation judgement apparatus 60. The banknote handling apparatus 50 and the degradation judgement apparatus 60 are connected by way of a network 70. The banknote handling apparatus 50 includes the vibration detection sensor 51, the data generation unit 52, and a transmission unit 53. The degradation judgement apparatus 60 includes a reception unit 61, a judgement unit 62, and a notification unit 63. The reception unit 61 is implemented by, for example, a communication module as hardware. Each of the judgement unit 62 and the notification unit 63 is implemented by, for example, a processor, such as a CPU, a DSP, and FPGA, as hardware. The degradation judgement apparatus 60 is implemented by, for example, as a computer.

Each of the vibration detection sensors 51 attached to the respective field repair units measures vibration data by periodically detecting vibration of each of the field repair units, and outputs the measured pieces of vibration data to the data generation unit 52. For example, the vibration detection sensor 51 starts detection of a vibration and measurement of vibration data at 13:00 every Wednesday. Furthermore, as described above, by measuring the vibration data obtained for a period of 3 seconds 10 times, and by dividing each of the pieces of the vibration data obtained for the period of 3 seconds into 0.3 seconds, the vibration detection sensor 51 acquires 100 pieces of vibration data each of which is obtained for the period of 0.3 seconds as the vibration data on the field repair unit (hereinafter, sometimes referred to as a "FRU data") .

The data generation unit 52 receives an input of the FRU data from each of the vibration detection sensors 51 that are attached to the respective field repair units. As illustrated in FIG. 9, the data generation unit 52 generates communication data DA by adding, to the FRU data, an apparatus ID capable for uniquely identifying the banknote handling apparatus 50 and a unit ID capable for uniquely identifying the field repair unit that is targeted for vibration detection (i.e., the field repair unit to which the vibration detection sensor 51 that corresponds to the output source of the FRU data is attached). FIG. 9 is a diagram illustrating one example of the communication data according to the present disclosure. The data generation unit 52 outputs the generated communication data DA to the transmission unit 53.

The transmission unit 53 transmits the communication data DA to the degradation judgement apparatus 60 by way of the network 70. The communication data DA that has been transmitted from the transmission unit 53 is received by the reception unit 61 included in the degradation judgement apparatus 60.

The reception unit 61 outputs the received communication data DA to the judgement unit 62.

The judgement unit 62 judges a FRU degradation level on the basis of the FRU data that is included in the communication data DA. The judgement unit 62 acquires 100 pieces of FRU data that are represented in the frequency domain by converting the time domain of each of the 100 pieces of FRU data to the frequency domain by using, for example, Fourier transformation, in the similar manner as described above. Then the judgement unit 62 detects a peak amplitude of each of the pieces of FRU data that are represented in the frequency domain. In the following description, the peak amplitude that has been detected in the FRU data is sometimes referred to as a "FRU peak amplitude". The 100 FRU peak amplitudes are acquired from the 100 pieces of FRU data.

On the other hand, the judgement unit 62 calculates the RMS of the vibration amplitude indicated in each of the 100 pieces of FRU data. In the following description, the amplitude RMS of the FRU data is sometimes referred to as "FRU amplitude RMS". The 100 pieces of FRU amplitude RMS are calculated from 100 pieces of FRU data.

After that, the judgement unit 62 calculates an average value of the 100 FRU peak amplitudes (hereinafter, sometimes referred to as a "FRU peak amplitude average value"). Furthermore, the judgement unit 62 calculates an average value of 100 pieces of FRU amplitude RMS (hereinafter, sometimes referred to as a "FRU amplitude RMS average value").

Here, in the judgement unit 62, the degradation judgement thresholds THP1, THP2, THP3, THR1, THR2, and THR3 that are obtained on the basis of the above described reference peak amplitudes and the above described pieces of reference amplitude RMS are set in advance. Accordingly, if the FRU peak amplitude average value is equal to or larger than THP1, and also, if the FRU amplitude RMS average value is equal to or larger than THR1, the judgement unit 62 judges that the FRU degradation level is present in the safe region Ra. Furthermore, if the FRU peak amplitude average value is equal to or larger than THP2 and is less than THP1, and also, if the FRU amplitude RMS average value is equal to or larger than THR2 and is less than THR1, the judgement unit 62 judges that the FRU degradation level is present in the attention region Rb. Furthermore, if the FRU peak amplitude average value is equal to or larger than THP3 and is less than THP2, and also, if the FRU amplitude RMS average value is equal to or larger than THR3 and is less than THR2, the judgement unit 62 judges that the FRU degradation level is present in the critical region Rc. Furthermore, if the FRU peak amplitude average value is less than THP3, and also, if the FRU amplitude RMS average value is less than THR3, the judgement unit 62 judges that the FRU degradation level is present in the failure region Rd. As described above, the FRU degradation level is the lowest in the safe region Ra, the FRU degradation level is the highest in the failure region Rd, and the FRU degradation level increases in the order of the safe region Ra, the attention region Rb, the critical region Rc, and the failure region Rd. In addition, the judgement unit 62 associates information indicating that the FRU degradation level is present in which of the region from among the safe region Ra, the attention region Rb, the critical region Rc, and the failure region Rd (hereinafter, sometimes referred to as "FRU degradation level information") with a set of the apparatus ID and the unit ID that are included in the communication data DA, and then outputs the associated data to the notification unit 63.

The notification unit 63 notifies an operator of the FRU degradation level. For example, the notification unit 63 associates the apparatus ID, the unit ID, and the FRU degradation level information, and causes a display (not illustrated) that is connected to the degradation judgement apparatus 60 to display the associated data. Consequently, the operator is able to identify how much level a rubber part that is included in which field repair unit that is included in which banknote handling apparatus is degraded.

In the above, the embodiment has been described.

As described above, the degradation judgement system according to the present disclosure (the degradation judgement system 100 according to the embodiment) includes field repair units (the deposit and withdrawal unit 3, the first storage unit 4, the second storage unit 6, the storage cassettes 7a to 7d, and the reject unit 8 according to the embodiment) provided in the banknote handling apparatus (the banknote handling apparatus 50 according to the embodiment), the sensor (the vibration detection sensor 51 according to the embodiment), the judgement unit (the judgement unit 62 according to the embodiment), and the notification unit (the notification unit 63 according to the embodiment). Each of the field repair units includes a rubber part. The sensor measures the vibration data by detecting vibration of the field repair unit. The judgement unit judges the degree of deterioration of the rubber part on the basis of the peak of the vibration amplitude that is obtained from the vibration data and on the basis of the root mean square of the vibration amplitude. The notification unit notifies the judged degree of deterioration.

By doing so, it is possible to replace the field repair unit in an appropriate time that is before a failure occurs in the field repair unit. For example, by replacing the field repair unit at a time when the degree of deterioration of the rubber part is indicated in the attention region Rb or the critical region Rc from among the safe region Ra, the attention region Rb, the critical region Rc, and the failure region Rd, it is possible to replace the field repair unit before a failure caused degradation of the rubber part occurs. Furthermore, in a period of time when the degree of deterioration of the rubber part is indicated in the safe region Ra from among the safe region Ra, the attention region Rb, the critical region Rc, and the failure region Rd, it is possible to prevent useless replacement of the field repair unit without replacing the field repair unit.

For example, the judgement unit judges that the degree of deterioration of the rubber part is higher as the peak of the vibration amplitude is lower.

Furthermore, for example, the judgement unit judges that the degree of deterioration of the rubber part is higher as the root mean square of the vibration amplitude is smaller.

By doing so, it is possible to accurately judge the degree of deterioration of the rubber part that is included in the field repair unit.

### Explanation of Reference

- 100: degradation judgement system
- 50: banknote handling apparatus
- 51: vibration detection sensor
- 52: data generation unit
- 53: transmission unit
- 60: degradation judgement apparatus
- 61: reception unit
- 62: judgement unit
- 63: notification unit

## Claims

1. A degradation judgement system comprising:
a field repair unit that is provided in a banknote handling apparatus and that includes a rubber part;
a sensor that measures vibration data by detecting vibration of the field repair unit;
a judgement unit that judges a degree of deterioration of the rubber part based on a peak of a vibration amplitude that is obtained from the vibration data and based on a root mean square of the vibration amplitude; and
a notification unit that gives a notification of the judged degree of deterioration.

2. The degradation judgement system according to claim 1, wherein the judgement unit judges that the degree of deterioration is higher as the peak is smaller.

3. The degradation judgement system according to claim 1, wherein the judgement unit judges that the degree of deterioration is higher as the root mean square is smaller.

4. A degradation judgement method comprising:
measuring vibration data by detecting vibration of a field repair unit that is provided in a banknote handling apparatus and that includes a rubber part; and
judging a degree of deterioration of the rubber part based on a peak of a vibration amplitude that is obtained from the vibration data and based on a root mean square of the vibration amplitude.
